# EUROPEAN PATENT APPLICATION

(11) **EP 3 663 615 A1**
(43) Date of publication of application: **10.06.2020**
(21) Application number: 18210176.6
(22) Date of filing: 04.12.2018
(51) Int. Cl.: F16H 57/04

(54) **GEARBOX**

(71) Applicant: AVL MTC Motortestcenter AB, 46138 Trollhättan (SE)
(72) Inventor: JAFARIAN, Peyman, 46143 Trollhättan (SE); ABERG, Magnus, 46191 Trollhättan (SE)
(74) Representative: Babeluk, Michael

(57) **Abstract**

The present invention relates to a gearbox with at least one pair of gears with helical gearing and a lubrication device (3) for lubrication of a meshing area of the pair of gears (1, 2), comprising at least one spray nozzle (4), aligned with a spray axis (S) toward the meshing area and connected to a pressure line (5). It is the object of the present invention to improve lubrication for a helical gearing of a gearbox. This is solved by a gearbox, wherein the spray nozzle (4) is aligned with a first plane (5) perpendicular to an axis of rotation (R1) of a first gear (1) of the helical gearing and the spray nozzle (4) is arranged with an offset (O) to a center plane (ζ) of the first gear (1) parallel to the first plane (5), where the offset (O) is bigger than one eighth width (W) of the first gear (1).

## Description

The present invention relates to a gearbox with at least one pair of gears with helical gearing and a lubrication device for lubrication of a meshing area of the pair of gears, comprising at least one spray nozzle, aligned with a spray axis toward the meshing area and connected to a pressure line.

Another object relates to a method for the lubricating of said gearbox.

Lubrication is crucial for long living gearboxes. Forms of lubrication methods for gearboxes are splash systems, pressure systems, and combined systems. In pressure systems, a spray nozzle connected to a pressure line lubricates the gearing. For gears with a higher velocity above about 25 m/s the lubrication method with pressure systems is used due to high churning losses of the gears diving in the oil which is related to splash lubrication method.

US 3,738,452 concerns a lubrication installation for change-speed transmissions wherein a spray nozzle is directed to the center plane of a gear. This gear has the form of a cone. Due to the direction of the spray nozzle, the lubrication is only guaranteed at the place where the spray axis and the mantle of the cone subtend. The outer circumference of the cone of the gear stays free from oil and lubrication cannot be guaranteed.

Another lubricating device is shown in EP 2 503 194 B1. Similar to the above-mentioned arrangement of the state of the art, the lubricating device comprises a spray nozzle. The spray nozzle is aligned with a tangent line extending from where a first and a second gear mesh. Out of this document only an option to lubricate a straight-toothed gearing is known.

Using helical gearings the following problem occurs: On one side in respect of a center plane of the gear, a first tooth is in contact and on the other side in respect of the center plane a second tooth is in contact with the second gear. Due to the rotation of the two gears and the movement towards each other, the area of contact with the second gear and the area of meshing of the first tooth moves over the surface. The lubricating device sprays oil in the area of the center plane of the gear. As a consequence of this and the movement from the teeth against each other, the oil is pushed to one side of the gear and the other side of the gear won't get in contact with the oil and won't get lubricated satisfactory. This could cause higher wear and higher losses.

It is the object of the present invention to improve lubrication for a helical gearing of a gearbox.

The technical problem outlined above is solved by the gearbox as mentioned in the beginning, wherein a point of intersection of the spray axis and one gear out of the pair of gears is arranged with an offset to a center plane of the first gear perpendicular to an axis of rotation of a first gear of the helical gearing, where the offset is bigger than one eighth width of the first gear.

Herein the meshing area is defined as to be the area of the gears which teeth are in contact with each other now. The plane preferably perpendicular to the axis of rotation in the middle (the center) of the gear is called a center plane. The first gear and the second gear are interchangeable. The width of the first gear is measured in the direction of the axis of rotation. Due to the offset of the center plane, the oil out of the spray nozzle is distributed by the meshing of the two gears and the lubrication is improved.

In a preferred embodiment the spray nozzle is aligned with a first plane perpendicular to the axis of rotation of the first gear of the helical gearing and the spray nozzle is arranged with the offset to the center plane of the first gear.

This effect is even increased when the nozzle is arranged towards the side of the gear where the first contact of teeth with helical gearing of the first gear and the second gear is located, in respect of the sense of rotation of the first gear. Due to that, the oil is transported to the other side of the gear and the oil film is distributed in a constant thickness over the surface of the gear.

In a preferred arrangement the spray nozzle is aligned with the spray axis that comprises an angle to a pitch plane extending from where first gear and a second gear mesh and the angle is bigger than 10 degrees. Because of the angle, one of the two gears can be cooled more effectively. The tangent line is an element of the pitch plane extending from the meshing area. Preferably the angle is from 20 to 30 degrees.

In a special design, the spray nozzle is faced to the bigger gear of the pair of gears and the oil is distributed towards the bigger gear of the pair of gears. Here, the gear with the larger diameter is understood to be the bigger gear.

It is advantageous when the spray axis of the spray nozzle is faced to the gear before meshing of the two gears. As a result, it is possible to cool and to reduce the friction at once.

It is especially advantageous if the offset is from one-eighth width to one-half width of the first gear and it is further advantageous if the offset is about three fourth of the width of the first gear.

To reduce friction and wear to a minimum it is advantageous that every pair of gears has one spray nozzle when more than one pair of gears are arranged in the gearbox. This is preferably when no gears rotate in oil and a dry sump concept is used for lubrication.

To improve the cooling effect and the reduce of friction it is preferred to control a flow rate of the oil through the spray nozzle depending on the power that gears are transferring, it is especially advantageous if the flow rate of the oil is controlled depending on the torque, where the flow rate is raised with raising torque through the gearing and/or if the flow rate of the oil is controlled depending on the pitch line velocity, where the flow rate is raised with raising pitch line velocity of the pair of gears with helical gearing.

This invention is preferably used with transmissions with a dry sump concept to reduce the churning losses. A splash lubrication is difficult to implement when the pairs of gears are above the oil level. In that case, this invention is practical. The invention is advantageous when the pitch line velocity is too high and force is needed to lubricate the meshing area.

The present invention is explained below in closer detail by reference to the embodiment shown in the schematic drawings, wherein:
- Fig. 1: is a front view of a detail of a gearbox according to the invention;
- Fig. 2: is a side view of the gearbox according to the invention;
- Fig. 3: is a front view of the schematic gearbox according to the invention without casing; and
- Fig. 4: is a side view of a detail of the gearbox.

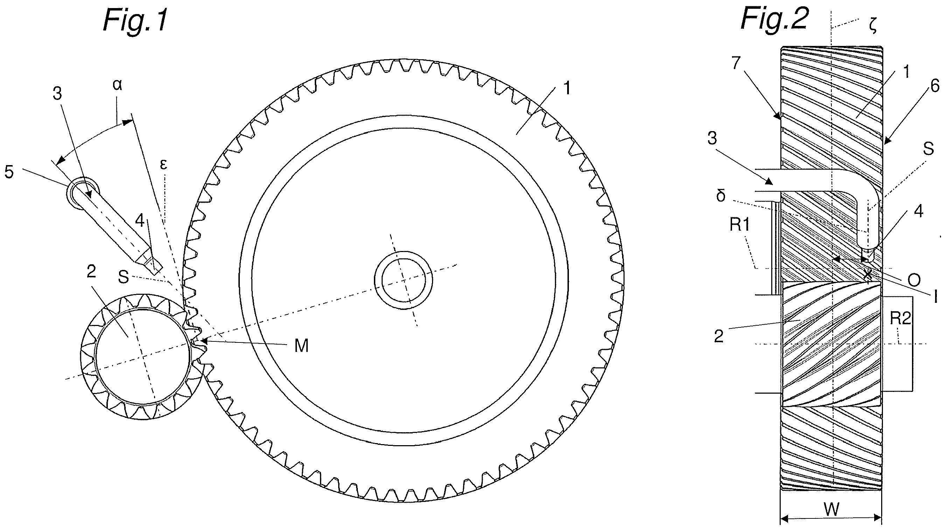

Fig. 1 shows a front view of a pair of gears with helical gearing of a gearbox according to the invention. The pair of gears consists of a first gear 1 and a second gear 2. In the embodiment shown in Fig. 1 and Fig. 2 the first gear 1 is the bigger gear and the second gear 2 is the smaller gear out of the pair of gears.

The first gear 1 is arranged rotatable around a first axis of rotation R1 and the second gear 2 is arranged rotatable around a second axis of rotation R2.

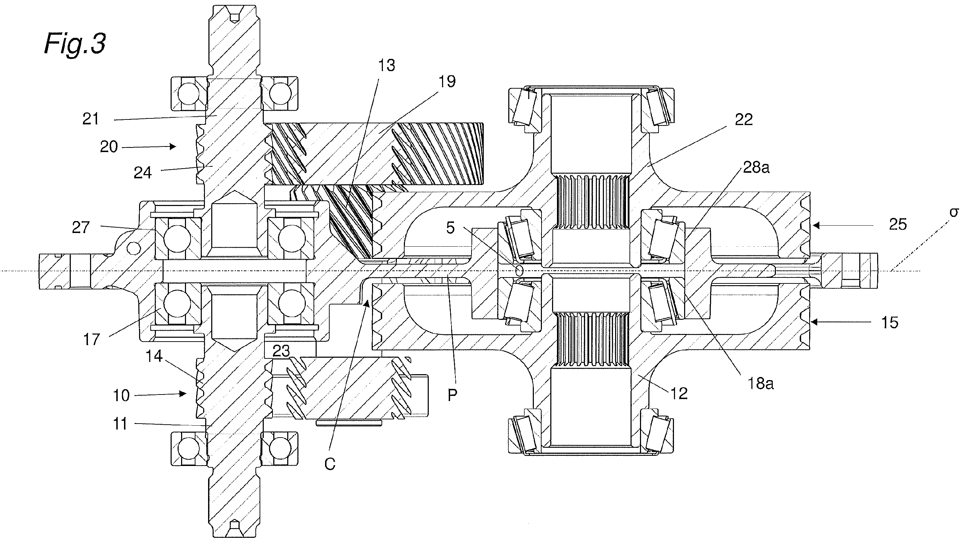

For cooling and to minimize friction and further to reduce wear a lubrication device 3 is arranged in the gearbox (as shown in Fig. 3). The lubrication device 3 comprises a spray nozzle 4 which is connected with a pressure line 5. The pressure line 5 provides the spray nozzle 4 with oil. The spray nozzle 4 is aligned with a spray axis S. Tangential to the pitch circles where teeth of the gears 1, 2 mesh extend a pitch plane ε. The spray axis S of the spray nozzle 4 comprises an angle α toward the pitch plane ε. The angle α is about 20° to 30°. To ensure proper transportation from oil out of the spray nozzle 4 to the gears 1, 2 the spray nozzle 4 is arranged with a small distance to the meshing gearing. In this embodiment as shown in Fig. 1 the distance between the meshing teeth M and the spray nozzle 4 is less than one width W of the first gear 1.

Fig. 2 shows a first plane δ that is preferably perpendicular to the axis of rotation R1 of the first gear 1. The spray axis S is an element of the first plane δ. Parallel to the first plane δ is a center plane ζ located, where the first plane δ and the center plane ζ have an offset O to each other. The center plane ζ is located in the middle of the first gear 1.

The spray nozzle 4 is faced to the first gear 1 on a first side 6 of the first gear 1. This first side 6 is the area where each tooth of the helical gearing meshes first when the pair of gears rotate.

The oil is sprayed out of the spray nozzle 4 depending on the torque and the pitch line velocity or the circumferential speed. With higher power transferred through the gearing, the flow rate is raised.

The oil reaches the first gear 1 before meshing near the first side 6 and due to meshing the oil is transported to a second side 7 of the first gear 1.

In Fig. 3 a gearbox in a first embodiment for a drive system of a vehicle, for example, an electric axle of an electric vehicle, according to the present invention is shown. The gearbox includes four pairs of gears. A first part 10 comprises a first input shaft 11, a first output shaft 12, and a first intermediate shaft 13. The first input shaft 11 and the first intermediate shaft 13 are connected via a first input-side gear stage 14. The first intermediate shaft 13 and the first output shaft 12 are connected via a first output-side gear stage 15.

A second part 20 comprises a second input shaft 21, a second output shaft 22 and at least one second intermediate shaft 23. The second input shaft 21 and the second intermediate shaft 23 are connected via a second input-side gear 24 stage. The second intermediate shaft 23 and the second output shaft 22 are connected via a second output-side gear stage 25.

The casing of the gearbox comprises a center plate P which is arranged in the area of the symmetry plane σ in a center section C. The center plate P is configured as a partition wall between a first section and a second section of the casing. The center plate P separates the first part 10 and the second part 20.

A first center bearing 17 of the first input shaft 11 and a first center bearing 18 of the first output shaft 12 are arranged in first holes 17a, 18a of the center plate P. A second center bearing 27 of the second input shaft 21 and a second center bearing 28 of the second output shaft 22 are arranged in second holes 27a, 28a of the center plate P. At least one of the first holes 17a, 18a and second holes 27a, 28a can be formed as blind hole.

At least one lubricating and/or cooling channel may be arranged in the center plate P. The pressure line 5 is located in the center plate P and the spray nozzles 4 are mounted on the center plate P. The pressure line 5 can be used as a lubricating and cooling channel. The spray nozzles 4 are directed to each pair of gears in the gearbox. The pressure line 5 can be connected with a pump to pump pressurized oil to the gear meshes.

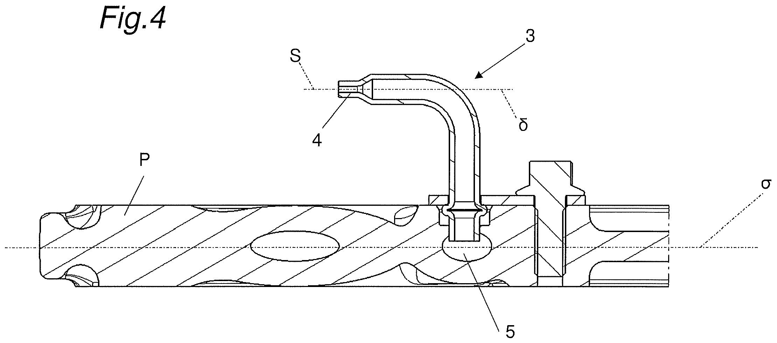

Fig. 4 shows the lubrication device 3 connected with the pressure line 5 and the spray nozzle 4 aligned with the spray axis S. The pressure line 5 is arranged as a channel in the center plate P.

## Claims

1. A gearbox with at least one pair of gears with helical gearing and a lubrication device (3) for lubrication of a meshing area of the pair of gears (1, 2), comprising at least one spray nozzle (4) aligned with a spray axis (S) directed toward the meshing area and connected to a pressure line (5), **characterised in that** a point of intersection (I) of the spray axis (S) and one gear (1) out of the pair of gears (1, 2) is arranged with an offset (O) to a center plane (ζ) of the first gear (1) perpendicular to an axis of rotation (R1) of a first gear (1) of the helical gearing, where the offset (O) is bigger than one eighth width (W) of the first gear (1).

2. The gearbox according to claim 1, **characterised in that** the spray nozzle (4) is aligned with a first plane (δ) perpendicular to the axis of rotation (R1) of the first gear (1) of the helical gearing and the spray nozzle (4) is arranged with the offset (O) to the center plane (ζ) of the first gear (1).

3. The gearbox according to claim 1 or 2, **characterised in that** the spray nozzle (4) is aligned with the spray axis (S) that comprises an angle (α) to a pitch plane (ε) extending from where first gear (1) and a second gear (2) mesh and the angle (α) is bigger than 10 degrees.

4. The gearbox according to claim 3, **characterised in that** the angle (α) is from 20 to 30 degrees.

5. The gearbox according to one of the preceding claims, **characterised in that** the spray nozzle (4) s faced to the bigger gear (1) of the pair of gears.

6. The gearbox according to any of the preceding claims, **characterised in that** the spray axis (S) of the spray nozzle (4) is faced to the gear (1) before meshing of the two gears (1, 2).

7. The gearbox according to any of the preceding claims, **characterised in that** the spray nozzle (4) is arranged towards the side (6) of the gear (1) where the first contact of teeth with helical gearing of the first gear (1) and the second gear (2) is located, in respect of the sense of rotation of the first gear (1).

8. The gearbox according to any of the preceding claims, **characterised in that** the offset (O) is from one-eighth width (W) to one-half width (W) of the first gear (1).

9. The gearbox according to any of the preceding claims, **characterised in that** the offset (O) is about three fourth of the width (W) of the first gear (1).

10. The gearbox according to any of the preceding claims, **characterised in that** more than one pair of gears are arranged in the gearbox and that every pair of gears has one spray nozzle (4).

11. A Method for lubricating a gearbox according to any of the preceding claims, **characterised in that** a flow rate of the oil through the spray nozzle (4) is controlled depending on the power the gears (1, 2) are transferring.

12. The Method according to claim 11, **characterised in that** the flow rate of the oil is controlled depending on the torque, where the flow rate is raised with raising torque through the gearing.

13. The Method according to claim 11 or 12, **characterised in that** the flow rate of the oil is controlled depending on the pitch line velocity, where the flow rate is raised with raising pitch line velocity of the pair of gears with helical gearing.
